# EUROPEAN PATENT APPLICATION

(11) **EP 4 174 564 A1**
(43) Date of publication of application: **03.05.2023**
(21) Application number: 21206071.9
(22) Date of filing: 02.11.2021
(51) Int. Cl.: G02F 1/155

(54) **ELECTROCHROMIC DEVICE COMPRISING A PLURALITY OF UNIT CELLS CONNECTED IN SERIES**

(71) Applicant: Freshape SA, 1690 Villaz-St-Pierre (CH)
(72) Inventor: BOUVARD, Olivia, 1007 Lausanne (CH); KORTZ, Carsten, 1004 Lausanne (CH); KUNG, Yen-Cheng, 1110 Morges (CH); LIU, Yuhang, 1030 Bussigny (CH); LI, Xiaoxiong, 2024 Ecublens (CH)
(74) Representative: Schneiter, Sorin

(57) **Abstract**

The present invention concerns an electrochromic device comprising a plurality of unit cells that are electrically connected in series, wherein the device comprises one or more electrode layers provided on a first side of the device, wherein at least one of said one or more electrode layers forms an electrode (e.g. anode) of a first cell and the corresponding counter electrode (e.g. cathode) of a second, neighbouring cell.

## Description

### Technical Field

The present invention relates to electrochromic devices and to methods for producing the same. The invention in particular relates to electrochromic devices comprising a plurality of unit electrochromic cells that are electrically connected in series.

### Background Art and Problems Solved by the Invention

Electrochromic devices comprise at least one material the color of which can be controlled by way of an electric potential applied across the device. The electric potential is suitable to induce a redox-reaction in the electrochromic material, which in turn will undergo a color change as a consequence.

Such devices have initially been proposed for use in rearview mirrors in automobiles such that in night driving conditions, application of a voltage would darken a solution in a cell incorporated in the mirror. In this manner, the mirror can reduce the glaring of light reflected from a vehicle driving behind the automobile comprising the mirror. In other applications, electrochemical devices are used as windows or separation walls, with the possibility of adjusting the transmissibility of light through the window ("smart windows") or wall by adjusting the redox status of the electrochromic material in the device. Some materials can be substantially transparent in at least one of their redox states, such that windows based on such devices can be involved in building automation systems, by controlling the amount of sunlight entering a building, just to mention an example. Furthermore, electrochromic devices are also envisaged as displays.

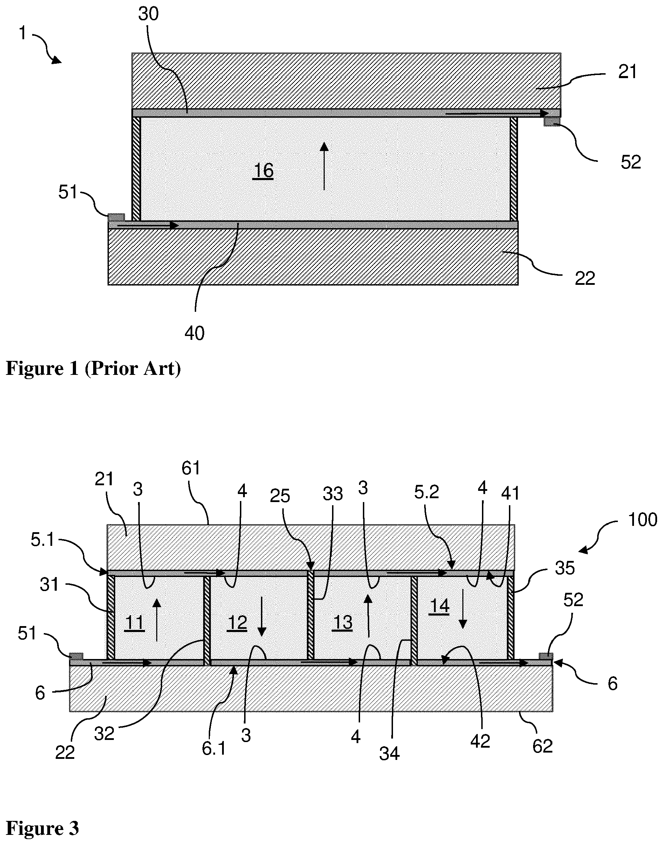

Figure 1 shows the architecture of a typical prior art electrochromic device 1, comprising two opposed substrates 21, 22 each coated with a transparent conductive material layer operating as electrodes 30, 40 of the device, and electrical contacts 51, 52, such that an electric potential can be established between the electrodes. The arrows show the flow of electrons (inverse to the current flow) through the device, such that electrode 30 functions as an anode and electrode 40 as a cathode in the polarity shown. The space 16 between the two electrodes comprises one or more electrochromic materials and other components, depending on the device. An architecture as shown in Figure 1 is disclosed in US patents US 4,451,741, US 3,453, 038, and US 5,151,816.

Regarding the way the electrochromic material is disposed in the inside of the cell, there exist two main groups, as set out in Alesanco et al, "All-in-One Gel-Based Electrochromic Devices: Strengths and Recent Developments", Materials, 2018, 11, 414. These two groups are (1) the layered-type and (2) all-in-one-type (AIO) configurations.

Layered devices comprise at least one deposited layer comprising the electrochromic material, generally deposited directly on one of the two electrodes. Other layers may be present, such as an ion storage layer, generally adjacent to the opposed electrode, and an ion conducting layer in between the electrochromic and the ion storage layers. Exemplary configurations are disclosed in US 8,228,587, US 2011/0003070, US 9,013,777 B2, and in KR 101528015B1. The latter document discloses devices comprising two layers of active electrochromic materials per unit device, wherein a plurality of unit devices are connected in series.

In contrast to the layered devices, all-in-one-type devices generally lack a deposited layer of the electrochromic material, which instead is dissolved in a matrix between the electrodes, so as to be able to move under the effect of diffusion or an applied electric potential within the matrix. All other components required for obtaining a functional device are generally also contained within the matrix, such as one or more solvents, dissolved ionic species, and additives. Kao et al, "Thermally Cured Dual Functional Viologen-Based All-in-One Electrochromic Devices with Panchromatic Modulation", ACS Appl. Mater. Interfaces 2016, 8, 4175-4184 disclose an AIO device comprising a network formed by the polymerisation of vinyl benzyl viologen (VBN) and methyl methacrylate (MMA) moieties by curing in the assembled device. This publication mentions technical challenges associated with AIO type electrochromic devices, such as the requirement of obtaining high absorption in the non-transmissive state of the device, low driving voltage, cycling stability, problems related to solvent leakage, and incomplete bleaching.

In addition to the problems reported in the prior art, the present invention in particular has the objective to provide an electrochromic device that can be implemented also for large scale applications, such as windows and panels for indoors and outdoors use, which has a short switching time between the transparent and non-transparent states, and which can be produced in a simple, straightforward process, preferably at a large scale based on available technologies. It is also an objective to provide a device having a relatively simple architecture for facilitating the production process of the device, for example avoiding a plurality of depositing and etching processes for obtaining the required connection between unit devices.

The present invention addresses the problems depicted above.

### Summary of the Invention

Remarkably, the present inventors provide an electrochromic device in which a plurality of side-by-side disposed unit cells are connected in series, wherein some electrodes provided at least one of the two sides are based on electrode layers shared between neighbouring devices. Remarkably, the electrochromic device can be easily fabricated in a cost-effective manner, and can readily be scaled up.

In an aspect, the invention provides an electrochromic device comprising: a plurality of side-by side disposed cells, each cell comprising one or more electrochromic material, said plurality of cells comprising common first and second opposed sides; and electrode layers provided at said first and second opposed second sides.

In another aspect, the invention provides an electrochromic device comprising: first and second substrates; a plurality of side-by side cells, each cell comprising one or more electrochromic materials, said plurality cells being provided between said first and second substrates; spaced-apart and/or electrically separated electrode layers connected to said first and second substrates in such a manner so as to be suitable to apply an electric potential across said plurality of cells.

In an aspect, the invention provides an electrochromic device comprising one or more first electrode layers provided on a first side of the device, wherein an individual electrode layer of said one or more first electrode layers forms electrodes of two neighbouring unit cells on said first side of the device.

In an aspect, the invention provides an electrochromic device comprising: a plurality of side-by side disposed cells, each cell comprising one or more electrochromic material, the device comprising first and second substrates, defining first and second opposed sides of said cells; and electrode layers provided at said first and opposed second sides.

In a preferred embodiment, a first electrode layer at one of said first and second opposed sides is provided so as to be suitable to function as an anode of a first cell and as a cathode of a second cell, said first and second cells being neighbouring side-by-side arranged cells of said device.

In a preferred embodiment, one or more of said electrode layers is connected at one of said first and second substrates so as to conduct oxidation of a reduced species of an electrochromic material contained in a first cell while simultaneously conducting reduction of an oxidized species of said electrochromic material contained in a neighbouring, second cell, and to transport current from said first to said second cell.

In a preferred embodiment, the cells comprise an electrochromic composition comprising: one or more solvent, one or more salts, two or more redox active compounds (or redox compounds) suitable to be reduced and oxidized, respectively, depending on the direction of a current flow through the device, wherein one, two or more of said redox active compounds is an electrochromic material.

In an aspect, the invention provides a method for producing an electrochromic device, comprising: providing first and second substrates, each substrate comprising electrically separated electrode layers; providing insulating walls or voids; assembling said first and second substrates and said insulating walls so as to define side-by-side arranged cells between said substrates; providing a composition in said cells, said composition comprising an electrochromic material, wherein said step of assembling said first and second substrates and said insulating walls is conducted such that an individual electrode layer on one of said substrates forms an anode of a first cell and a cathode of a second cell, said first and second cells being side-by- side arranged, neighbouring cells.

Further aspects and preferred embodiments of the invention are defined herein below and in the appended claims. Further features and advantages of the invention will become apparent to the skilled person from the description of the preferred embodiments given below.

### Brief Description of the Drawings

Figure 1 is a schematic cross-sectional view of an electrochromic device of the prior art.
Figures 2 and 3 are schematic cross-sectional view of electrochromic device in accordance with different embodiments of the invention.
Figures 4A and 4B are photographs showing an exemplary device produced in accordance with an embodiment of the invention in the coloured (Fig. 4A) and bleached or transparent state (Fig. 4B), respectively.
Figure 5 is a photograph showing a device prepared for the purpose of comparison, the device having the architecture in accordance with the prior art as shown in Figure 1.

Hereinafter, preferred embodiments of the device of the invention are described, in order to illustrate the invention, without any intention to limit the scope of the present invention.

### Detailed Description of the Preferred Embodiments

The present invention relates to electrochromic devices and to a method for producing the device. The device comprises a plurality of unit or individual electrochromic devices or cells. The individual electrochromic devices may also be referred to herein as "unit devices", "unit cells", "electrochemical regions" and the like. Generally, each cell of said plurality of cells is a functional electrochromic device, such that the electrochromic device of the invention can also be considered as an assembly of individual electrochromic devices.

For the purpose of the present specification, a "plurality" of cells refers to three (3) or more cells, wherein the upper limit of the number of cells is generally only limited by technical or feasibility constraints. For example, the electrochromic device may comprise from 3 to 1000, preferably 4 to 500, even more preferably 5 to 200 cells.

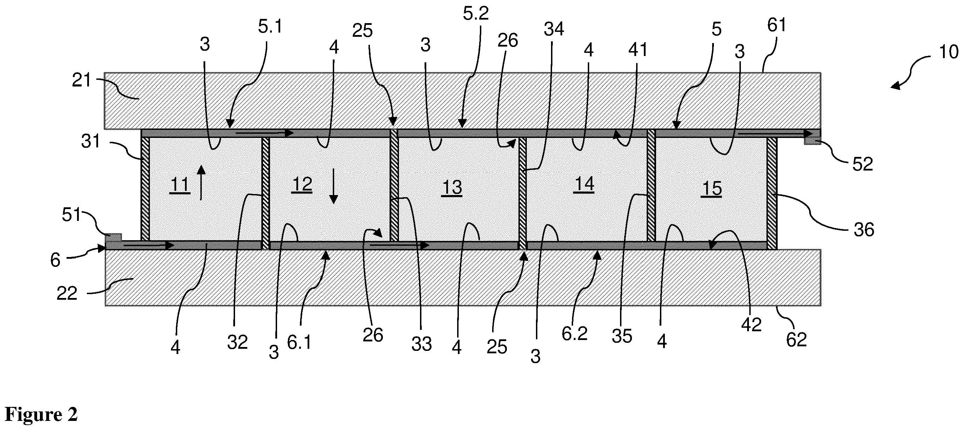

**Figure 2** and **Figure 3** schematically show electrochromic devices 10, 100 in accordance with embodiments of the invention. Both devices comprise a plurality of unit electrochromic devices or cells 11-15, and 11-14, respectively, with the difference that device 10 comprises an uneven number of unit cells 11-15 and the device 100 comprise an even number of unit cells 11-14.

In an embodiment, the device of the invention comprises first and second opposed substrates 21, 22, wherein electrode layers 5, 5.1, 5.2; 6, 6.1, 6.2 are connected to and preferably deposited on inner surfaces of said opposed substrates, said inner surfaces facing said cells. Preferably, said inner surfaces provide said first and second (or top and bottom) opposed sides 41, 42 of the cells.

In the following, electrochromic device 10 of Fig. 2 will be described first. The device comprises first and second opposed substrates 21, 22, at least one of which is preferably transparent and/or translucid. In a preferred embodiment, both substrates are transparent and/or translucid.

Transparent substrates may be selected from glass and plastic substrates, including substrates comprising one or more selected from polycarbonate, polyethylene terephthalate, and acrylic glass, for example.

The two substrates preferably extend in parallel planes, so as to define inner and outer sides, wherein the inner sides 41, 42 of the two substrates face each other (are directed towards each other) and the outer sides 61, 62 of the two substrates face away from each other. At least one but possibly both outer surfaces 61, 62 can be considered as viewing surfaces, as the viewing surface will be exposed to and/or oriented towards an exterior observer looking at the device.

In the embodiment shown, the first and second sides 41, 42 of the cells 11-15 including the electrodes are defined by and coincide with the inner surfaces of the opposed substrates, which is why the same reference numerals 41, 42 are used in this specification. The invention also encompasses the presence of additional and/or other layers or structures between one or both of the substrates 21, 22 and the corresponding electrode layers. In this case, the first and second sides 41, 42 of the cells 11-15 are defined by the layer or structure in contact with the electrode layers.

In accordance with the invention, the first side 41 of said cells 11-15 is the side that is associated with and/or closer to (preferably defined by) the first substrate 21, whereas the second side 42 of said cells is associated with and/or closer to (preferably defined by) the respective other substrate 22. The first and second sides 41, 42 preferably extend substantially in parallel to the outer surfaces 61, 62 if the device.

In the embodiment shown, the first side 41 of the cells 11-15 extend in the same plane, as defined by the inner surface of the flat substrate 21. The invention also encompasses that the first side of a first cell (e.g. cell 11) is not necessarily parallel to the first side of a neighbouring cell (e.g. 12), for example in cases where the inner surfaces of the substrates are structured.

As shown in Fig. 2, electrode layers 5.1, 5.2, 5 and 6, 6.1, 6.2 are deposited on each of the inner surfaces 41, 42, respectively, of the substrates. The different electrode layers 5.1, 5.2, 5 on the first substrate 21 are physically spaced-apart from each other by way of gaps 25 between the electrode layers of the same substrate, such that the individual electrode layers on the first substrate are not in direct physical contact and are electrically isolated from each other. The same applies to the electrode layers 6, 6.1, 6.2 on the second substrate. An electric contact 51, 52 is provided on each of the two substrates, for connecting the device to an external source of electric power (not shown). An electric contact is electrically connected with the outmost electrode layers 5, 6 of each of the two substrates 21, 22.

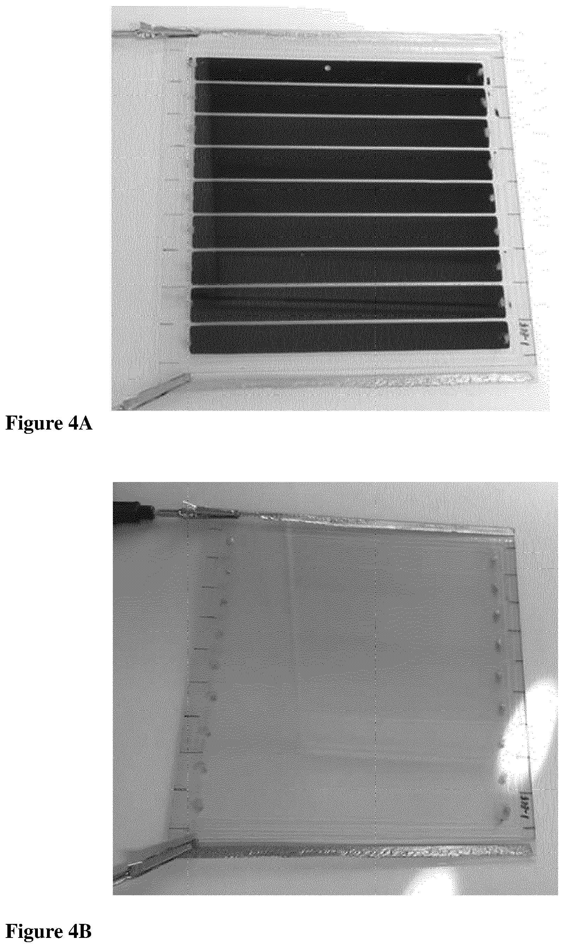

In a preferred embodiment, the electrode layers are provided in the form of longitudinal stripes. The stripes extend preferably substantially in parallel, preferably in a direction that is perpendicular to the cross-sections shown in Figs. 2 and 3, and thus normal to the plane on which the figures are drawn. The stripes are preferably continuous stripes of an electrode material. The electrodes are preferably substantially rectangular as illustrated by the exemplary device shown on the photograph in Fig. 4A. Other shapes, such as wave-like stripes are also encompassed by the present invention.

In an embodiment, the electrode layers are deposited on a flat, even and/or smooth surface. In an embodiment, electrode layers are deposited on a non-structured surface. In the embodiment shown in Figs 2 and 3, the electrode layers are deposited on the inner surfaces of the substrates 21, 22, respectively, said inner surfaces forming the sides 41, 42 of the unit devices. In accordance with this embodiment, the inner surfaces 41, 42 of the substrates extend in a continuous plane.

In another, alternative embodiment, the electrode layers on one or both sides are deposited on a structured surface, such as a corrugated surface, whereby the electrode layers may be deposited on parts of the corrugated surface. For example, one or both the substrates 21, 22 may comprise a structured inner surface, on which, or on part of which, the electrode layers may be deposited.

The electrode layers 5.1, 5.2, 5, 6, 6.1, 6.2 preferably comprise or consist essentially of a transparent conductive material, for example selected from transparent conductive oxides and transparent conductive polymers. For example, conductive electrode materials may be selected from SnO₂, fluorine doped tin oxide (FTO), indium doped tin oxide (ITO), aluminium zinc oxide, and PEDOT.

In a preferred embodiment, said first and second opposed substrates 21, 22 and said plurality of electrode layers are conductive substrates, more preferably conductive transparent substrates, which are preferably patterned so as to electrically separate neighbouring electrode layers deposited on the same substrate. A conductive substrate may also be considered as a "substrate-electrode assembly".

Transparent conductive substrates generally include a transparent conductive material coated on one side of a transparent glass or plastic substrate. Such conductive substrates (conductive glass, conductive plastic) are commercially available and include, for example, FTO coated glass or plastic and ITO coated glass or plastic. The separated electrode layers 5.1, 5.2, 5, on the first substrate 21 and 6, 6.1, 6.2 on the second substrate 22 may conveniently be obtained from the conductive substrates by suitable patterning methods, such as chemical or mechanical ablation, including scribing or etching techniques, for example by laser ablation.

In an embodiment, the device of the invention comprises a plurality of insulating walls 31, 32, 33, 34, 35, 36 and/or voids, provided for separating the contents of neighbouring cells. The separation walls define the plurality of individual electrochromic devices or cells 11- 15. The central separation walls 32-35 as shown in Figs 2 and 3 may be replaced by voids, for example voids under vacuum or containing one or more gases suitable to provide an electric separation between the contents of neighbouring cells.

A "neighbouring cell", for the purpose of the present description, is a cell that is the immediate neighbour and thus adjacent to a reference cell. Generally, neighbouring cells are separated only by a separation wall (or void) and do not comprise intermediate unit cells in between. Furthermore, neighbouring cells are preferably directly connected in series and preferably share at least one electrode layer.

The separation walls or voids preferably extend perpendicularly to the electrode layers. The separation walls extend between the first and second substrates 21, 22.

The separation walls or voids are preferably provided such that the cells 11-15 of the device are disposed one next to each other, in a side-by-side manner, so that the two outmost lateral cells 11, 15 have each one neighbouring cell (12 and 14, respectively), whereas the inner cells 12-14 all have two lateral, side-by-side disposed, left and right neighbouring cells. All cells 11-15 are preferably aligned with one but preferably with both the sides 41 and 42 of the cells.

In an embodiment, an individual insulating wall 32 is provided on an electrode layer 5.1 on a first side and extends to an interspace 25 between two neighbouring electrode layers 6, 6.1 on the second side of said cells.

As can be seen in Fig. 2, the separation walls 32-35 or voids that separate two neighbouring cells are preferably provided to extend from an interspace 25 between two, electrically separated neighbouring electrode layers 5.1, 5.2 of a first substrate 21 to about the center region 26 of an electrode layer 6.1 of the second, opposed substrate. The separation walls or voids preferably physically separate the electrochromic composition or contents of neighbouring cells. Towards a first side, a given separation wall or void 33 coincides with the electric separation 25 between neighbouring electrodes, whereas, on the respective other, opposed side, the separation wall or void ends on an electrode layer 6.1, such that the electrode layer on this side of the device electrically connects neighbouring devices. As can be seen, the separation walls or voids extend alternatingly in the described way. Accordingly, a given separation wall or void 32 allows an electrical connection between neighbouring cells 11, 12 on the first side 41, but is provided between separated electrode layers 6, 6.1 on the second side 42, whereas the subsequent neighbouring separation wall or void 33 allows an electrical connection between neighbouring cells 12, 13 on the second side 42, but is provided between separated electrode layers 5.1, 5.2 on the first side 41. As a consequence of the disposition of the electrode layers and the separation walls or voids between two neighbouring cells, the cells are electrically connected in series.

In an embodiment, neighbouring cells 11-15 and in particular said first and second cells are electrically connected in series, preferably through the electrode layers 5, 5.1, 5.2; 6, 6.1, 6.2 and charge transporting components of the cells.

The inner spaces of each of the cells 11-15 are preferably defined by the disposition of the substrates (or the electrodes) and the separation walls or voids. The inner spaces preferably comprise the components required to obtain, together with the electrodes, functional electrochromic unit devices. Accordingly, the cells comprise at least an electrochromic material.

The unit cells may comprise layered electrochromic devices. Such devices typically comprise an electrochromic material deposited on one of the two electrodes of a cell. Some devices may comprise several layers of electrochromic materials, for example one deposited on a first electrode and the other deposited on the counter electrode. Layered electrochromic devices further preferably comprise an ion transport layer, typically an electrolyte comprising dissolved ionic species, which are generally added in the form of a salt. In some embodiments, the layered unit cell comprises an ion storage layer. If the electrochromic device of the invention comprises layered unit cells, the order of the layers of a given cell is alternated compared to the order of the corresponding layers in the one or two neighbouring cells. In other words, neighbouring cells have inversed orientations, in an alternating manner. This is due to the connection of the cells in series and due to the fact that the various different layers are required to be deposited in a particular order in view of the current flow through the device. Furthermore, this is due to the fact that an electrode layer on one side of the device functions as an anode of a given cell and as a cathode of the neighbouring cell, as specified in more detail herein after.

In a preferred embodiment, the unit cells 11-15 are "all in one" (AIO)-type electrochromic devices. Such devices comprise an electrochromic composition (also referred to as "electrochromic mixture") comprising one or more electrochromic material (or electrochromic dye) provided so as to be capable of migrating and/or diffusing within said composition. The electrochromic material is preferably not deposited and/or not provided in an immobile layer and the device preferably does not comprise different layers. One may consider such electrochromic cells also as single-layer devices. Generally, the electrochromic materials in AIO devices are non-polymeric molecules and/or small molecules. The electrochromic composition may comprise polymers, however.

Preferably, As used herein, the term "small molecule" refers to a substance or compound that has a relatively low molecular weight (e.g., less than 4'000, less than 2'000, particularly less than 1 kDa or 800 Da). Typically, small molecules are not proteins, polypeptides, or nucleic acids, though they may comprise amino acids, di- or oligopeptides.

In an embodiment, the unit cells comprise a composition comprising or consisting essentially of a liquid, gel, semi-solid or solid electrolyte. In a preferred embodiment, the composition comprises or consists essentially of a liquid, gel, or semi-solid electrolyte. The composition may be referred to as an "electrochromic composition" in the present specification.

In a preferred embodiment, the composition comprises:
- at least one electrochromic material that is preferably a redox active compound, such that it is suitable to exist in the form of a reduced and an oxidized species forming a redox-couple, wherein said reduced and oxidized species have different colors;
- at least one solvent or solvent mixture suitable to dissolve said species of said redox-couple.

Preferably, said reduced and an oxidized species are provided to be able to diffuse within said solvent and/or within said cells, in particular to diffuse towards and away from at least one electrode, for example depending on their redox status and/or the electric potential.

In an embodiment, the composition further comprises one or more salts. The salts are preferably provided for reducing the resistance of the device and for improving the flow of current.

In an embodiment, the ion transport material comprises one or more cations selected from lithium, sodium, potassium, alkylimidazolium, alkylpyridinium, alkylphosphonium alkylammonium and tetra-n-buthylammonium. Preferably, said alkyl is C1-C20 alkyl, more preferably C1-C10 alkyl, most preferably C1-C4 alkyl, for example methyl.

In an embodiment, the electrochromic composition comprises a salt of any one of the aforementioned cations.

In an embodiment, the electrochromic composition comprises one or more anions selected from bistriflimide or TFSI ([(CF₃SO₂)₂N]⁻), perchlorate (ClO₄⁻), tetrafluoroborate (BF₄⁻), and hexafluorophosphate (PF₆⁻).

In an embodiment, the electrochromic composition comprises a salt of any one of the aforementioned anions.

Preferably, the composition may comprise one or more salts comprising a cation listed above and an anion listed above, for example a salt comprising tetrabutylammonium and bis(trifluoromethane)sulfonimide (TFSI ) or hexafluorophosphate.

In the composition comprising the electrochromic material, the solvent or solvent mixture is preferably provided for dissolving the one or more electrochromic materials and/or the salts. Exemplary solvents are propylene carbonate, ethylene carbonate, γ-butyrolactone, and acetonitrile, for example.

In an embodiment, the composition comprises two or more redox active compounds suitable to be reduced and oxidized, respectively, depending on the direction of a current flow through the device, wherein at least one of said redox active compounds is said one or more electrochromic material.

In a preferred embodiment, the composition comprises two or more redox compounds, wherein at least two redox compounds are different electrochromic materials. The term "different" refers to electrochromic materials having different structures and/or different chemical composition and preferably different electrochromic properties.

For example, different electrochromic properties include the situation where a first electrochromic material is coloured in the oxidized state and substantially transparent in the reduced state, and a second electrochromic material is transparent in the oxidized state and coloured in the reduced state. In another example, different electrochromic properties include materials having different colours when being in the coloured state.

In an embodiment, a first electrochromic material is a cathodic dye and a second electrochromic material is an anodic dye. There may be two or more anodic dyes and/or two or more cathodic dyes.

The solvent or solvent mixture in combination with the salt or salts and dissolved redox compounds preferably forms an electrolyte. The electrolyte may be semi-solid, gelled or liquid. For example, the electrolyte may be a gel or semi-solid electrolyte.

In a preferred embodiment, the composition further comprises one or more selected from binders and polymers. The binder and/or polymer is preferably a matrix-forming component, imparting a more solid-like or gel-like mechanical properties to the electrolyte. Exemplary polymeric matrix components include PMMA (poly(methyl methacrylate)), PVC (polyvinyl chloride), PEO (polyethylene oxide) and PAN (polyacrylonitrile), just to mention a few.

In some embodiments, the composition may further be selected from solid electrolytes lacking a solvent (solvent-free polymer electrolytes). Although such solid electrolytes may exhibit some limitations, they still may exhibit ionic conductivities provided by mobile ionic species in the solid electrolyte.

Turning back to Fig. 2 with the components of the device being described, the operation of the device can be explained. In particular, as becomes apparent, some of the electrode layers 5.1, 5.2, 5.1, 6.2 are provided on their respective side 41, 42 of the cells 11-15 so as to span over two neighbouring cells and to be in electric contact with both said two cells, with a separation wall (or void) being provided in contact with the electrode layer so as to provide a separation between said two cells. In an embodiment, a first electrode layer 5.1 reaches from said first cell 11 to said second cell 12.

As a consequence, the electrode layer spanning over two cells works as an anode for a first cell and as a cathode for the neighbouring cell, depending on the current flow through the device. Such electrode layers spanning over two cells may also referred to herein as "double-electrodes". The electrode layers forming a double electrode are configured to work simultaneously as a cathode of a first cell and as an anode of a second cell, and vice versa, depending on the current direction.

In an embodiment, a second electrode layer 6.1 at the other of said first and second opposed sides is provided so as to be suitable to function as an anode 3 of said second cell 12 and as a cathode 4 of a third cell 13, said second and third cells being neighbouring side-by-side arranged cells of said device. Preferably, the second electrode layer 6.1 reaches from said second cell to a third cell, which is a neighbour of said second cell, but not of said first cell.

For example, it is stated that the arrows in Fig. 2 indicate the flow of electrons through the device, which is by definition inverse to the flow of current. In this case, a first part of the electrode layer 5.1, provided on the first surface 41, is the anode 3 of the cell 11, while the other part of the electrode layer 5.1 is the cathode 4 of the neighbouring cell 12. Once the electrons have crossed cell 12, they get in contact with the electrode layer 6.1 provided on the opposed surface 42, which is the anode of the cell 12. The electrode layer 6.1, as layer 5.1 on the opposed side, spans over two cells, but layer 6.1 spans over cells 12 and 13, such that in cell 13 electrode layer 6.1 forms the cathode of the cell.

In summary, the device comprises electrode layers provided on one side of the device, said electrode layers electrically connect two neighbouring devices, forming an anode of a first cell and a cathode of the second, neighbouring cell, when a given electric potential is applied.

In an embodiment, the device 10 comprises a first plurality of electrode layers 5.1, 5.2 each of which is disposed at the first side 41 of two neighbouring cells 11, 12; 13, 14, and a second plurality of electrode layers 6.1, 6.2 each of which is disposed at the second side 42 of two neighbouring cells 12, 13; 14, 15.

In an embodiment, during operation of the device and/or when applying a suitable electric working potential, the direction of a current flow through an individual cell 12 is inverse to the direction of the current flow through a neighbouring cell 13, or, if applicable, the two neighbouring cells 11, 13.

Once a predetermined voltage and/or current is applied as described, at least one electrochromic material undergoes a redox reaction and changes color, for example turning from transparent to coloured, or vice versa. If there are two electrochromic materials, both having a transparent or translucid state, the predetermined voltage and/or current preferably results in the oxidation of one and a reduction of the other electrochromic material, wherein the two materials are preferably both transparent or both coloured when the predetermined voltage and/or current is applied.

Like with coloring, bleaching may be controlled by applying the predefined bleaching voltages/currents. For example, bleaching may be obtained passively by interrupting the potential (open circuit) and/or by closing the electrical connections between the two electrical contacts (short circuit).

When inversing the electrical potential, the current flow through the device is inversed and may thus correspond to the direction of the arrows in Fig. 2, such that reference numerals 4 designate the anodes and reference numeral 3 the cathodes of the device. Therefore, reference numerals 3 and 4 may more generally be understood as referring to an electrode and the corresponding counter electrode of two neighbouring devices. If 3 is an anode, 4 is a cathode and vice versa.

In an embodiment, the device of the invention comprises one or more first electrode layers 5.1, 5.2 provided on a first side 41 of the device, wherein an individual electrode layer of said one or more first electrode layers forms electrodes (an anode and a cathode) of two neighbouring cells on said first side 41 of the device.

In a preferred embodiment, the device further comprises one or more second electrode layers 6.1, 6.2 provided on a second side 42 of the device, wherein an individual electrode layer of said one or more second electrode layers forms electrodes (a cathode and an anode) of two neighbouring cells on said second side 41 of the device. In this case, said first and second electrode layers are preferably provided in a staggered manner, such that one of said first electrode layers 5.1, 5.2 forms only one of the two opposed electrodes (anode or cathode) of a given unit cell of the device, and one of said second electrode layers 6.1, 6.2 forms an opposed electrode (cathode or anode, respectively) of said given unit cell. For example, with reference to Fig. 2, the individual unit cell 13 may be said "given unit cell".

In other words, an electrode layer 5.1 on the first side 41 may form electrodes (anode and cathode) of the neighbouring cells n and n+1 (e.g. cells 11 and 12 in Fig. 2), whereas an electrode layer 6.1 on the second side 42 may form electrodes (cathode and anode) of the neighbouring cells n+1 and n+2 (e.g. cells 12 and 13), wherein n is an integer starting number of a given cell of the device (e.g. cell no. 1, with reference numeral 11 in Fig. 2), such that the cell n+1 is disposed side-by-side in between neighbouring cells n and cell n+2.

In the device shown in Fig. 2, electrode layers 5 and 6 of cells 13 and 15, respectively, do not electrically connect two cells on the same side. The cells 11 and 15 are the laterally outmost cells in Fig. 2, and do only have one direct neighbouring cell. The lateral outmost cells are generally the cells that are directly connected electrically to the two electrical contacts 51, 52 of the device, which electrical contacts are provided for connecting the electric to a source of electrical power and thus for applying the electric potential required to operate the device.

Therefore, the electrode layers 5, 6 connected to the electrical contacts 51, 52 of the device preferably form the cathode 4 or anode 3 of only one cell 11, 15, respectively.

Electrode layers forming electrodes of two neighbouring devices as described further above (double-electrodes) are only possible for electrodes that can electrically connect two cells and which can thus form the electrode and counter electrode (e.g. anode and the cathode) in two neighbouring cells.

In Fig. 2, the assembly comprising the substrate 21 and the corresponding electrode layers 5, 5.1, 5.2 deposited on the substrate (the substrate-electrode assembly) is identical to the corresponding assembly comprising the substrate 22 on the opposed said and the corresponding electrode layers 6, 6.1, 6.2. Identical means that the assemblies, when considered as isolated components of the device, are the same components. These assemblies have thus the same number of electrode layers and the electrode layers have the same forms and dimensions (e.g. obtained by an identical patterning) and are provided, for example deposited, in an identical manner. It is possible to use identical substrates 21, 22 having identical dimensions, too. When producing the device 10, the two substrate-electrode assemblies 21, 5, 5.1, 5.2 and 22, 6, 6.1, 6.2, respectively, can be therefore be conceived and produced as a single component, which is produced several times. Two such components are then assembled such that the electrodes layers face each other and the electrical contacts 51, 52 are on opposed lateral sides, as shown in Fig. 2. Accordingly, only one construction plan for both opposed substrate-electrode assemblies of the device is required, which renders the process for producing these devices very efficient.

The use of identical components is also an advantage in view of the use of the transparent conductive substrates, such as transparent conductive oxides (TCOs) as mentioned above, which are commercially available and which can thus be used for preparing the device of the invention. It will be sufficient to scribe or etch the pattern of the electrode layers on a transparent conductive substrate to obtain the substrate-electrode assemblies ready for assembling the device of the invention.

Identical opposed substrate-electrode assemblies are possible only in case of devices having an uneven number of unit cells. In this case, the electric contacts are generally provided on opposed sides 41, 42 and/or opposed substrates of the device.

**Figure** 3 shows another embodiment of a device 100 comprising an even number of unit cells 11-14. The overall construction and operation of the device is the same as described above with respect to the embodiment shown in Fig. 2, and the same reference numerals have therefore the same meaning.

As a consequence of the even number of cells, the two opposed electric contacts 51, 52 for applying an electrical potential are provided on the same side 42 of the cells, whereas on the opposed side 41, the electrode layers are all provided in the form of "double-electrodes" functioning as an electrodes (anode and cathode, respectively) of two neighbouring unit cells. As there are four unit cells in the device 100, there are two double-electrode layers 5.1 and 5.2 on the first side 41 in the device. On the opposed side 42, the device 100 comprises one double electrode layer 6.1, and two lateral electrode layers 6, one for each of the two laterally outmost cells 11 and 14, for connecting each of the laterally outmost cells to one of the two electric contacts 51, 52, respectively.

Preferably, the maximum number of double-electrodes as described can be determined from the number of cells (N) in the device. If the device comprises an even number of cells (Ne), the total number of double electrode layers is preferably Ne-1, resulting in an uneven number of double electrodes. If the device comprises an uneven number of cells (Nu), the total number of double electrode layers is preferably Nu-1 and thus an even number of double electrodes. In case of Nu, each side 41, 42 of the unit device comprise the same number of double electrodes, whereas in the case of Ne, the side of the device comprising the electrical contacts 51, 52 of the device generally comprises one double electrode less than the opposed side that is free of electrical contacts.

In case of Ne, both electric contacts 51, 52 are generally on the same side and/or substrate. In case of Nu, the electrical contacts are generally on opposed sides and/or substrates, as shown in Figs. 3 and 4, respectively.

The invention provides a method for producing an electrochromic device, comprising: providing first and second substrates, each substrate comprising electrically separated electrode layers 5, 5.1, 5.2, 6, 6.1, 6.2. As mentioned above, transparent conductive substrates, such as TCOs and transparent conductive polymers, can be obtained as described in the literature. The separate electrode layers can be obtained by patterning methods as described elsewhere in this specification, so as to obtain appropriately shaped and disposed, electrically separated electrode layers.

The method further comprises providing insulating walls or voids. Insulating walls may be deposited on one of the two opposed substrates comprising the electrode layers. Preferably, insulating walls may be obtained by depositing a sealant such as a glue, a photospacer, a polymer, a resin or a glass frit or a combination of those.

Voids may be obtained, for example, by depositing continuously a gel-type or semisolid electrolyte and removing the electrolyte at the appropriate position by patterning processes such as etching, UV exposure, laser ablation, ultrasonic cutting and the like.

Alternatively, voids may also be obtained by depositing selectively the gel-type, semisolid or film electrolyte in an appropriate pattern, for example using regional-selective depositing techniques such as ink-jet printing, screen-printing, slot-die coating and alike. The voids may then be foreseen at positions where no film electrolyte is deposited.

The method comprises assembling said first and second substrates and said insulating walls so as to define side-by-side arranged cells between said substrates and providing a composition in said cells, said composition comprising an electrochromic material.

The order of these steps depends on the manufacturing process chosen for adding the composition. Exemplary methods encompassed by the invention may be selected from hole-filling, One Drop Filling (ODF), spreading and lamination, for example.

In the hole filling method, the patterned conductive substrates and the sealant forming the separation walls are assembled first, so as to obtain the device containing the cells but lacking the electrochromic composition. The latter is introduced in the form of a liquid or gel electrolyte with at least two small openings placed preferably in opposite corners of the device by surface capillarity or using a syringe. The holes are then sealed to close the cavity.

In the ODF method, the composition is generally in liquid or gel form and is dropped onto one of the patterned conductive substrates, a sealant is dispensed on the bottom or top substrate, and a second substrate is pressed on the first one under vacuum resulting in closed cells without holes.

The spreading method may be used if the composition has comparatively high viscosity to the extent that the ODF method does not yield satisfactory results. In this case, the highly viscous gel electrolyte is spread or extruded on a first patterned conductive substrate, a sealant is added and a second patterned conductive substrate is pressed on the first one.

In the lamination method, the electrochromic composition is made as a free-standing film and placed on top a first patterned conductive substrate, a sealant is added and a second conductive substrate is pressed on the first one. The sealant may be added to one of the patterned conductive substrates before pressing the second substrate on the first one.

In the lamination method, the electrochromic composition is in the shape of a free-standing film and can be placed on top a first patterned conductive substrate. A second glass is placed on top and the assembly is placed in the laminator, between two membranes. A vacuum is performed and the membranes are pressing the two pieces of glass together. Temperatures up to 150°C, but preferably below 100°C, are generally used to favour adhesion of the film to the substrate. The pressure may also be applied on the substrates and the film may be assembled with rollers, especially in the case of flexible substrates.

In the method of the invention, the assembly of the components and in particular of the patterned conductive substrates and said insulating walls or voids is preferably such that an individual electrode layer on one of said substrates forms an anode of a first cell and a cathode of a second cell, said first and second cells being side-by side arranged, neighbouring cells. The disposition of the electrodes in the final device is achieved by patterning the conductive substrates and the separation walls or voids such that the assembly of the components automatically results in the required disposition of the electrodes.

While certain of the preferred embodiments of the present invention have been described and specifically exemplified above, it is not intended that the invention be limited to such embodiments. Various modifications may be made thereto without departing from the scope and spirit of the present invention, as set forth in the following claims. Herein below, examples of the invention are disclosed. These examples are for illustration only and are not intended to limit the scope of the present invention.

### Example

### Preparation of the glass cavity

An electrochromic device is prepared based on a substrate of glass coated with fluorine-doped tin oxide bought as-is from a glass manufacturer. This fluorine-doped tin oxide layer is then selectively patterned using laser ablation (laser wavelength = 1064 nm) to create conductive bands insulated from each other. The bands have a width of 4 cm and a length of 20 cm. The top and bottom glass have the same laser pattern, in the top glass, holes are drilled with the same laser, at the top and at the bottom of the cell, to allow for subsequent filling of the electrochromic materials. After laser patterning and drilling, the glasses are cleaned and dried using a professional glass washing machine with brush and detergent. Once cleaned, acrylic glue is deposited on one of the glasses. The glue serves both as a spacer between two adjacent cells and as a sealant. Spacers with a height of 100 microns are deposited on the glass and the glue to leave a precise gap between the two glass panes. The other glass is placed on the first one, leaving a voluntary misalignment of about 5 mm millimeters to allow for electrical connection. The two glasses are then pressed together using vacuum. After the pressure is established, the samples are illuminated with UV light (wavelength below 405 nm) in order to cure the glue. When the glue is cured, the pressure is released and the gap of the formed cavity is measured, in order to assess if the cavity is ready to be filled. In parallel, the electrochromic mixture is prepared.

### Preparation of the active material

The anodic and cathodic dyes, respectively viologen and phenazin, are weighted and put in a vessel. Then, the poly(methyl methacrylate) and tetrabutylammonium bis (trifluoromethane)sulfonimide salt are weighted and put in the same vessel. Finally, the propylene carbonate solvent is poured onto the other elements and the solution is then stirred until total dissolution. Moderate heat is used to accelerate the dissolution of the species.

### Filling

A syringe is filled with the prepared active material, this solution is injected through the holes to fill the cells one by one. After filling, the holes are sealed using acrylic glue and cured with UV light. To facilitate electrical connection to the power supply, copper tape is applied to the sides of the device of this exemple. Alligator clips are then used to contact the electrodes. A voltage of 6.3 V is used to color this 200mm x 200mm device composed of nine cells. The transmittance of the coloured device (Fig. 4A) was below 4% at 600 nm, when measured with a spectrophotometer taking air as the reference.

**Figure 4A** shows a photograph of the device obtained as described. One can distinguish the dark colored, parallel stripes which are the cells comprising the electrochromic mixture. The transparent substrates as well as the copper foil contacts on the top and the bottom in the photograph can also be seen. Finally, the dark stripes are separated by the clear acrylic glue sealant. **Figure 4B** shows the same device in the bleached (transparent) state. The transparent state in this case was characterized by an average visible transmittance of 60% or higher and a color neutral appearance, such that (a^{∗})²+(b^{∗})²<200 in the CIELAB color space.

As can be seen from Fig. 4A the cells have a longitudinal, preferably substantially rectangular form, which corresponds to electrode layers divided by half by way of the respective separation walls. The laterally outmost cells follow the outline of the corresponding electrode layers, which are not in the form of double-electrodes.

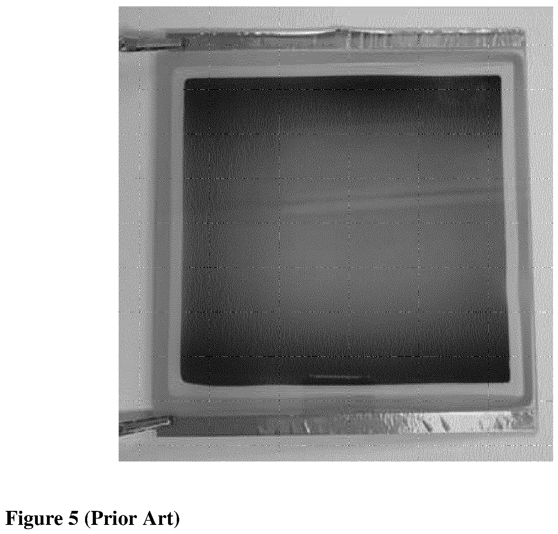

For comparison, **Figure 5** shows a photograph of a device in the coloured state having the architecture as shown in Figure 1, the planar device (without laser patterning and cells separation) is made using the same materials electrochromic mixture as the device shown in Figs 4A and 4B. This device cannot be coloured fully on a size of 200mm x 200mm because of the voltage drop at the center due to the low electrical conductivity of fluorine-doped tin oxide.

## Claims

1. An electrochromic device (1) comprising:
- a plurality of side-by side disposed cells (11-15), each cell comprising one or more electrochromic material, said plurality of cells comprising first and second opposed sides (41, 42);
- electrode layers (5, 5.1, 5.2; 6, 6.1, 6.2) provided at said first and second opposed second sides;
wherein a first electrode layer (5.1) at one of said first and second opposed sides is provided so as to be suitable to function as an anode (3) of a first cell (11) and as a cathode (4) of a second cell (12), said first and second cells being neighbouring side-by-side arranged cells of said device.

2. The device of claim 1, wherein said first electrode layer reaches from said first cell to said second cell.

3. The device of any one of claims 1 or 2, wherein a second electrode layer (6.1) at the other of said first and second opposed sides is provided so as to be suitable to function as an anode (3) of said second cell (12) and as a cathode (4) of a third cell (13), said second and third cells being neighbouring side-by-side arranged cells of said device.

4. The device of any one of the preceding claims, comprising a first plurality of electrode layers (5.1, 5.2) each of which is disposed at the first side of two neighbouring cells, and a second plurality of electrode layers (6.1, 6.2) each of which is disposed at the second side of two neighbouring cells.

5. The device of any one of the preceding claims, wherein neighbouring cells (11-15) and in particular said first and second cells are electrically connected in series, preferably through the electrode layers (5, 5.1, 5.2; 6, 6.1, 6.2) and charge transporting components of the cells.

6. The device of any one of the preceding claims, wherein a direction of a current flow through a cell during operation of the device is inverse to the direction of the current flow through a neighbouring cell, or, if applicable, the two neighbouring cells.

7. The device of any one of the preceding claims, comprising first and second opposed substrates (21, 22), wherein said electrode layers are connected to and preferably deposited on inner surfaces of said opposed substrates, said inner surfaces facing said cells and providing said first and second opposed sides (41, 42).

8. The device of claim 7, wherein said first and second opposed substrates (21, 22) and said plurality of electrode layers are conductive transparent substrates, which are preferably patterned so as to electrically separate neighbouring electrode layers deposited on the same substrate.

9. The device of any one of the preceding claims, wherein the cells comprise a ("all in one") composition comprising the electrochromic material provided so as to be capable of migrating and/or diffusing within said composition.

10. The device of any one of the preceding claims, wherein the cells comprise a composition comprising:
- at least one electrochromic material suitable to exist in the form of a reduced and an oxidized species forming a redox-couple, wherein said reduced and oxidized species have different colors;
- at least one solvent or solvent mixture suitable to dissolve said species of said redox-couple; wherein said reduced and an oxidized species are provided to be able to diffuse within said solvent and/or within said cells, in particular to diffuse towards and away from at least one electrode, depending on their redox status.

11. The device of claim 10, further comprising one or more matrix components selected from binders and polymers.

12. The electrochromic device of any one of the preceding claims, wherein said device comprises a plurality of insulating walls (31-34) or voids, provided for separating the contents of neighbouring cells.

13. The electrochromic device of claim 12, wherein an individual insulating wall (32) is provided on an electrode layer (5.1) on a first side and extends to an interspace (25) between two neighbouring electrode layers (6, 6.1) on the second side of said cells.

14. The electrochromic device of any one of the preceding claims, which comprises a plurality of insulating walls (32, 33, 34) or voids provided alternatingly between neighbouring, electrically separated electrode layers (5.1, 5.2), and on top of said electrode layers (5.1, 5.2), so as to physically separate neighbouring cells (11, 12, 13, ...) sharing a common electrode layer.

15. The electrochromic device of any one of the preceding claims, wherein said cells have a longitudinal, preferably substantially rectangular form, and/or wherein said electrode layers form continuous stripes of an electrode material.

16. A method for producing an electrochromic device, comprising:
- providing first and second substrates (21, 22), each substrate comprising electrically separated electrode layers (5.1, 5.2);
- providing insulating walls or voids (31-34);
- assembling said first and second substrates and said insulating walls so as to define side-by-side arranged cells (11-15) between said substrates;
- providing a composition in said cells, said composition comprising an electrochromic material,
wherein assembling said first and second substrates and said insulating walls or voids is conducted such that an individual electrode layer on one of said substrates forms an anode (3) of a first cell and a cathode (4) of a second cell, said first and second cells being side-by side arranged, neighbouring cells.

17. An electrochromic device (1) comprising:
- first and second substrates (21, 22);
- a plurality of side-by side cells (11-15), each cell comprising one or more electrochromic materials, said plurality cells being provided between said first and second substrates (21, 22);
- spaced-apart and/or electrically separated electrode layers (5, 5.1, 5.2; 6, 6.1, 6.2) connected to said first and second substrates in such a manner so as to be suitable to apply an electric potential across said plurality of cells;
wherein one or more of said electrode layers is connected at one of said first and second substrates so as to conduct oxidation of a reduced species of an electrochromic material contained in a first cell while simultaneously conducting reduction of an oxidized species of said electrochromic material contained in a neighbouring, second cell, and to transport current from said first to said second cell.

18. An electrochromic device (1) comprising one or more first electrode layers (5.1, 5.2) provided on a first side (41) of the device, wherein an individual electrode layer (5.1) of said one or more first electrode layers forms an electrode of two neighbouring cells on said first side (41) of the device.

19. The electrochromic device of claim 18, further comprising one or more second electrode layers (6.1, 6.2) provided on a second side (42) of the device, wherein an individual electrode layer (6.1) of said one or more second electrode layers forms electrodes of two neighbouring cells on said second side (41) of the device.

20. The electrochromic device of claim 19, wherein said first and second electrode layers are preferably provided in a staggered manner, such that one of said first electrode layers (5.1, 5.2) forms only one of the two opposed electrodes (anode or cathode) of a given a unit cell (11) of the device, and one of said second electrode layers (6.1, 6.2) forms an opposed counter electrode (cathode or anode, respectively) of said given unit cell.
